# EUROPEAN PATENT APPLICATION

(11) **EP 4 418 726 A1**
(43) Date of publication of application: **21.08.2024**
(21) Application number: 22880375.5
(22) Date of filing: 13.10.2022
(51) Int. Cl.: H04W 28/02

(54) **INFORMATION PROCESSING METHOD AND RELATED DEVICE**

(30) Priority: 13.10.2021 CN 202111192322
(71) Applicant: China Mobile Communication Co., Ltd Research Institute, Beijing 100053 (CN); CHINA MOBILE COMMUNICATIONS GROUP CO., LTD., Beijing 100032 (CN)
(72) Inventor: LIU, Liang, Beijing 100053 (CN); HAN, Xingyu, Beijing 100053 (CN); HU, Nan, Beijing 100053 (CN); LI, Nan, Beijing 100053 (CN)
(74) Representative: Gunzelmann, Rainer
(86) International application number: PCT/CN2022/125076
(87) International publication number: WO 2023/061439

(57) **Abstract**

The present application provides an information processing method and related devices. The information processing method includes: performing, by a terminal, a first operation; wherein the first operation includes at least one of the following: transmitting first information to a first base station; wherein the first information is used to indicate first status information of a QoE configuration, and the first status information of the QoE configuration is current status information of a QoE configuration which the terminal is in; receiving second information transmitted by a second base station; wherein the second information is used to indicate second status information of a QoE configuration, and the second status information of the QoE configuration is status information of a QoE configuration indicated by the second base station for the terminal to be in. The first base station and the second base station are the same base stations or different base stations.

## Description

### CROSS-REFERENCE TO RELATED APPLICATION

The present application is filed based on and claims the priority of Chinese Application No. 202111192322.7 filed on October 13, 2021, the disclosure of which are incorporated in their entireties by reference herein.

### TECHNICAL FIELD

Embodiments of the present application relate to the field of communication technologies, and in particular to an information processing method and related devices.

### BACKGROUND

Quality of Experience (QoE) represents a real perception level of a user's experience with a service. Through QoE data collection and reporting, the network side can grasp the user's real experience, so that network optimization can be carried out in a targeted manner to improve user experience.

QoE data is large in volume and has low priority; in case of network congestion, reporting of the QoE data will occupy a large buffer space and radio overhead of a terminal. In addition, in the mobility scenario, due to different network loads and radio link conditions of different base stations, in case of handover from a source base station to a target base station, continuity of QoE data reporting is not guaranteed.

### SUMMARY

Embodiments of the present application provide an information processing method and related devices, which can solve the problem of discontinuity in QoE data reporting in existing technologies.

In order to solve the above problem, in a first aspect, one embodiment of the present application provides an information processing method performed by a terminal, including:
performing a first operation; wherein the first operation includes at least one of the following:
transmitting first information to a first base station; wherein the first information is used to indicate first status information of a QoE configuration, and the first status information of the QoE configuration is current status information of a QoE configuration which the terminal is in;
receiving second information transmitted by a second base station; wherein the second information is used to indicate second status information of a QoE configuration, and the second status information of the QoE configuration is status information of a QoE configuration indicated by the second base station for the terminal to be in;
wherein the first base station and the second base station are the same base stations or different base stations.

In a second aspect, one embodiment of the present application provides an information processing method performed by a first base station, including:
performing a second operation; wherein the second operation includes at least one of the following:
receiving first information transmitted by a first device; wherein the first information is used to indicate first status information of a QoE configuration, and the first status information of the QoE configuration is current status information of a QoE configuration which a terminal is in;
transmitting third information to the first device; wherein the third information is used to indicate third status information of a QoE configuration, and the third status information of the QoE configuration is status information of the QoE configuration indicated by the first base station for the terminal to be in;
wherein the first device is the terminal or a second base station.

In a third aspect, one embodiment of the present application provides an information processing method performed by a second base station, including:
performing a fourth operation, wherein the fourth operation includes at least one of the following:
transmitting first information to a first base station; wherein the first information is used to indicate first status information of a QoE configuration, and the first status information of the QoE configuration is current status information of a QoE configuration which a terminal is in;
receiving third information transmitted by the first base station; wherein the third information is used to indicate third status information of a QoE configuration, and the third status information of the QoE configuration is status information of a QoE configuration indicated by the first base station for the terminal to be in;
transmitting the second information or third information to the terminal; wherein the second information is used to indicate second status information of a QoE configuration, and the second status information of the QoE configuration is status information of the QoE configuration indicated by the second base station for the terminal to be in.

In a fourth aspect, one embodiment of the present application provides an information processing device, including:
a first transceiver configured to perform a first operation, wherein the first operation includes at least one of the following:
transmitting first information to a first base station; wherein the first information is used to indicate first status information of a QoE configuration, and the first status information of the QoE configuration is current status information of a QoE configuration which a terminal is in;
receiving second information transmitted by a second base station; wherein the second information is used to indicate second status information of a QoE configuration, and the second status information of the QoE configuration is status information of a QoE configuration indicated by the second base station for the terminal to be in;
wherein the first base station and the second base station are the same base stations or different base stations.

In a fifth aspect, one embodiment of the present application provides an information processing device, including:
a second transceiver configured to perform a second operation, wherein the second operation includes at least one of the following:
receiving first information transmitted by a first device; wherein the first information is used to indicate first status information of a QoE configuration, and the first status information of the QoE configuration is current status information of a QoE configuration which a terminal is in;
transmitting third information to the first device; wherein the third information is used to indicate third status information of a QoE configuration, and the third status information of the QoE configuration is status information of a QoE configuration indicated by the first base station for the terminal to be in;
wherein the first device is a terminal or a second base station.

In a sixth aspect, one embodiment of the present application provides an information processing device, including:
a third transceiver configured to perform a fourth operation, wherein the fourth operation includes at least one of the following:
transmitting first information to a first base station; wherein the first information is used to indicate first status information of a QoE configuration, and the first status information of the QoE configuration is current status information of a QoE configuration which a terminal is in;
receiving third information transmitted by the first base station; wherein the third information is used to indicate third status information of a QoE configuration, and the third status information of the QoE configuration is status information of a QoE configuration indicated by the first base station for the terminal to be in;
transmitting second information or the third information to the terminal; wherein the second information is used to indicate second status information of a QoE configuration, and the second status information of the QoE configuration is status information of a QoE configuration indicated by the second base station for the terminal to be in.

In a seventh aspect, one embodiment of the present application provides an electronic device, including: a processor, a memory, and a computer program stored on the memory and executable on the processor; wherein the processor executes the computer program to perform steps of the above method.

In an eighth aspect, one embodiment of the present application provides a computer-readable storage medium, including: a computer program stored thereon; wherein the computer program, when executed by a processor, causes the processor to perform steps of the above method.

In the embodiments of the present application, between the terminal and the base station, the terminal can inform the base station of current status information of the QoE configuration which the terminal is in, so that the base station can determine subsequent operations performed on the terminal based on the status of the QoE configuration of the terminal. The base station may also use information to indicate the terminal to be in a state of QoE configuration expected by the base station, thereby controlling QoE-related behavior of the terminal. This makes the interaction of QoE-related information between the terminal and the base station more timely and convenient. Between base stations, it is also possible to use information to inform each other of the current status of the QoE configuration of the terminal or a status of the QoE configuration that the base station expects the terminal to be in. This also makes the interaction of QoE-related information between the base stations more timely and convenient. Therefore, flexibility and continuity of QoE measurement of the terminal are improved.

### BRIEF DESCRIPTION OF THE DRAWINGS

FIG. 1 is a schematic diagram of a network system applicable to an embodiment of the present application;
FIG. 2 is a flow chart of QoE measurement according to an embodiment of the present application;
FIG. 3 is a first flowchart of an information processing method according to an embodiment of the present application;
FIG. 4 is a second flowchart of an information processing method according to an embodiment of the present application;
FIG. 5 is a third flowchart of an information processing method according to an embodiment of the present application;
FIG. 6a shows a first interaction diagram of an information processing method in a scenario 1 according to an embodiment of the present application;
FIG. 6b shows a second interaction diagram of an information processing method in the scenario 1 according to an embodiment of the present application;
FIG. 7a shows a first interaction diagram between an AS layer and a NAS layer of a terminal in the scenario 1 according to an embodiment of the present application;
FIG. 7b shows a second interaction diagram between an AS layer and a NAS layer of a terminal in the scenario 1 according to an embodiment of the present application;
FIG. 7c shows a third interaction diagram between an AS layer and a NAS layer of a terminal in the scenario 1 according to an embodiment of the present application;
FIG. 8 shows an interaction diagram of an information processing method in a scenario 2 according to an embodiment of the present application;
FIG. 9 is a first schematic diagram of an information processing device according to an embodiment of the present application;
FIG. 10 is a second schematic diagram of an information processing device according to an embodiment of the present application;
FIG. 11 is a third schematic diagram of an information processing device according to an embodiment of the present application; and
FIG. 12 is a schematic diagram of an electronic device according to an embodiment of the present disclosure.

### DETAILED DESCRIPTION

The technical solutions in the embodiments of the present application will be described hereinafter in a clear and complete manner in conjunction with the accompanying drawings of the embodiments of the present application. Obviously, the following embodiments are merely a part of, rather than all of, the embodiments of the present application, and based on these embodiments, a person skilled in the art may obtain the other embodiments, which also fall within the scope of the present application.

The terms "first", "second" and the like in the present application are used to distinguish similar objects and are not necessarily used to describe a specific order or sequence. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the present application is used to indicate at least one of connected objects, for example, A and/or B and/or C, means that there are seven situations: there is A alone, there is B alone, there is C alone, there are both A and B, there are both B and C, there are both A and C, and there are A, B and C.

In the embodiments of the present application, words such as "exemplary" or "for example" are used to represent examples, illustrations or explanations. Any embodiment or design described as "exemplary" or "for example" in the embodiments of the present application is not to be construed as preferred or advantageous over other embodiments or designs. Rather, the words "exemplary" or "for example" are intended to present related concepts in a concrete manner.

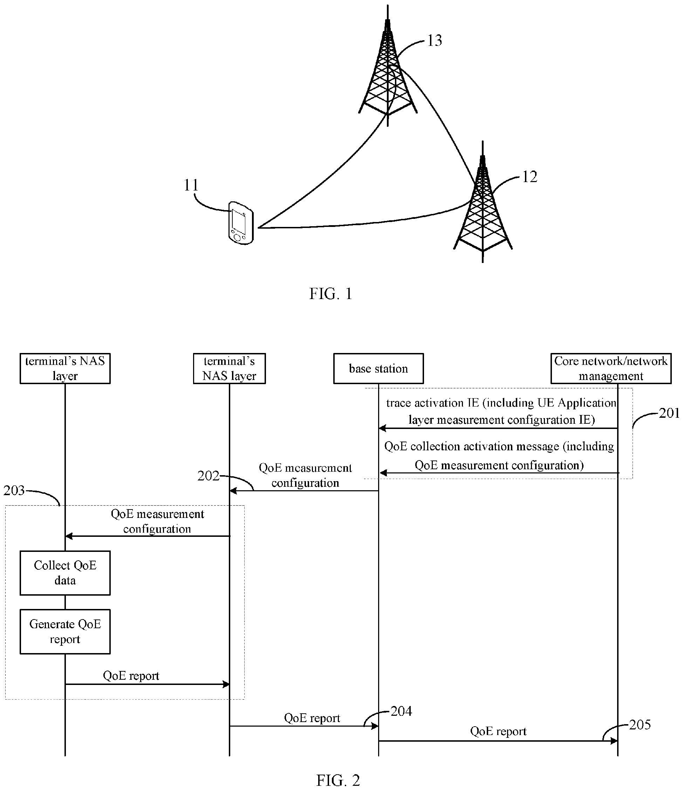

Referring to FIG. 1, FIG. 1 is a schematic diagram of a network system applicable to an embodiment of the present application.

As shown in FIG. 1, a terminal 11, a first base station 12 and a second base station 13 are included. After the terminal 11 accesses the first base station 12, communication can be performed between the terminal 11 and the first base station 12. After the terminal 11 accesses the second base station 13, communication can be performed between the terminal 11 and the second base station 13. Communication can be performed between the first base station 12 and the second base station 13.

The terminal 11 may also be referred as user equipment (UE). In practical applications, the terminal may be a mobile phone, a tablet personal computer, a laptop computer, a personal digital assistant (PDA), a mobile internet device (MID), a wearable device or vehicle-mounted equipment, etc. each of the first base station 12 and the second base station 13 may be a source base station of the terminal or a target base station of the terminal.

For ease of understanding, some of contents involved in the embodiments of the present application are described hereinafter.

QoE measurement includes collection and transmission of QoE data. In related art, after a core network (CN) or a network management unit activates QoE configuration, the terminal can collect QoE data based on the QoE configuration, and periodically report the QoE data to the network device until signaling for deactivating the QoE configuration is received from the network device.

Access stratum (AS) is referred to as an AS stratum hereinafter.

Non-access stratum (NAS) is referred to as a NAS layer hereinafter. The NAS layer includes at least one of an application layer and other non-access stratum.

FIG. 2 is a flow chart of QoE measurement according to an embodiment of the present application. As shown in FIG. 2, one specific process of QoE measurement includes the following steps.

Step 201: in case that a trace activation IE transmitted by a Quadrature Amplitude Modulation (QAM)/CN to the base station includes UE Application layer measurement configuration IE, activating QoE measurement function so that a network management unit (management-based QoE collection) or the core network (signaling-based QoE collection) transmits a QoE collection activation message to the base station, where the QoE collection activation message may include but not limited to QoE reference ID, area configuration, QoE measurement configuration files and other information.

Step 202: transmitting, by the base station, the QoE measurement configuration to the terminal.

Step 203: after the terminal receives the QoE measurement configuration in a radio resource control (RRC) connected state, starting to collect QoE data. Specifically, after an AS layer of the terminal receives the QoE measurement configuration, the AS layer of the terminal transmits the QoE measurement configuration to a NAS layer, and then the NAS layer collects QoE data of an application layer and periodically generates a QoE report. The NAS layer of the terminal transmits the QoE report to the AS layer, and then the AS layer transmits the QoE report to the base station.

Step 204: transmitting, by the terminal, the QoE report to the base station.

Step 205, transmitting, by the base station, the QoE report to the network management unit or the core network or other QoE collection network element.

An information processing method according to an embodiment of the present application will be described hereinafter.

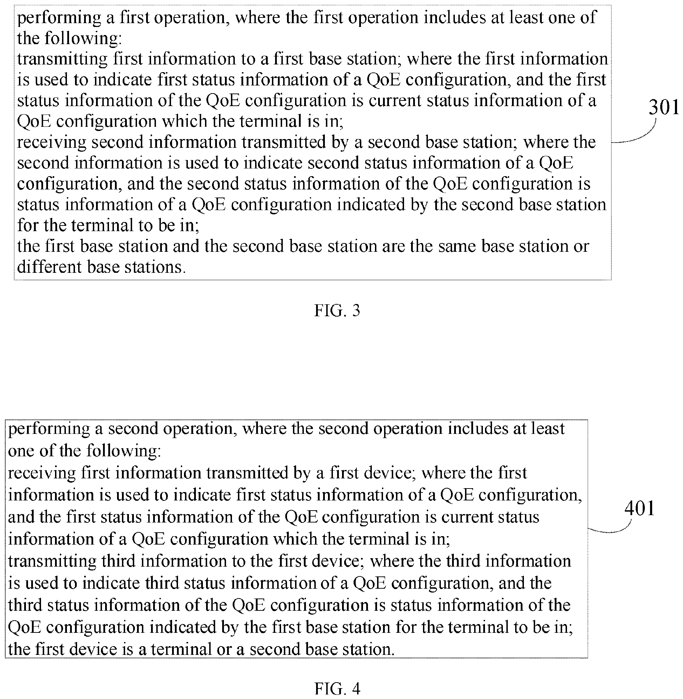

Referring to FIG. 3, FIG. 3 is a first flowchart of an information processing method according to an embodiment of the present application. The information processing method shown in FIG. 3 may be performed by a terminal.

As shown in FIG. 3, the information processing method may include the following steps.

Step 301: performing a first operation.

The foregoing first operation includes at least one of the following:
1) transmitting first information to a first base station; where the first information is used to indicate first status information of a QoE configuration, and the first status information of the QoE configuration is current status information of a QoE configuration which the terminal is in;
2) receiving second information transmitted by a second base station; where the second information is used to indicate second status information of a QoE configuration, and the second status information of the QoE configuration is status information of a QoE configuration indicated by the second base station for the terminal to be in.

The first base station and the second base station are the same base station or different base stations.

In the embodiment of the present application, the terminal transmits the first information to the base station, so that the base station can determine status of the QoE configuration of the terminal, and then determine subsequent QoE-related operations performed on the terminal. In addition, the base station may transmit the second information to the terminal to indicate status of the QoE configuration of the terminal, thereby controlling QoE-related behavior of the terminal and improving flexibility and continuity of QoE measurement of the terminal.

In some embodiments, the first status information of the QoE configuration or the second status information of the QoE configuration includes at least one of the following:
first state, where the first state corresponds to QoE report sending behavior;
second state, where the second state corresponds to QoE report stop sending behavior.

The QoE report sending behavior includes the behavior of transmitting QoE data to the network device. When the status information of the QoE configuration of the terminal is the first state, the terminal transmits the QoE data to the base station or the core network or the network management unit or other QoE collection network element.

The QoE report stop sending behavior, in some embodiments, includes any of the following: QoE report release behavior; QoE report suspension behavior; QoE report pause behavior. When the status information of the QoE configuration of the terminal is the second state, the terminal at least stops transmitting QoE data to the base station or the core network or the network management unit or other QoE collection network element. Specifically, it may include but not limited to at least one of the following: deactivating the QoE configuration and stopping collection of QoE data, pausing collection of QoE data, continuing to collect QoE data but pausing transmission of QoE data.

It is to be understood that implementation form of the status information of the QoE configuration is not limited to this, and may be determined according to actual situations. Here, the status information of the QoE configuration being the first status information or the second status information is taken as an example for illustration without any limitation.

The first operation in the embodiment of the present application is described in detail hereinafter.

In some embodiments, the first operation above includes the foregoing item 1).

That is, the first operation includes: transmitting first information to a first base station.

In this embodiment, the first base station is a base station accessed by the terminal, and may be a target base station for handover of the terminal, or any base station accessed by the terminal. The terminal notifies the first base station of the status information of the current QoE configuration through the first information. In some embodiments, there are two cases including: a first case that after the terminal accesses the first base station, the terminal transmits the first information to the first base station; and a second case that the terminal transmits the first information to the first base station after the status information of the QoE configuration of the terminal is changed.

After receiving the first information, the first base station may determine an operation to be performed on the terminal according to the first status information of the QoE configuration. In some embodiments, there are following two cases.

In a first case, the first status information of the QoE configuration is the foregoing first status information. After receiving the first information, the first base station may not perform an operation on the terminal, so that the QoE configuration of the terminal remains in a state corresponding to the QoE report sending behavior, and subsequently, the first base station receives and processes or forwards, according to the related procedures of QoE measurement, the QoE data transmitted by the terminal. Alternatively, if the first base station cannot currently receive QoE data or the network status of the first base station is poor, the first base station may transmit information to the terminal to instruct switching QoE configuration of the terminal to a status corresponding to the QoE report stop sending behavior.

In a second case, the first status information of the QoE configuration is the foregoing second status information. The first base station may transmit information to the terminal to instruct switching QoE configuration of the terminal to a status corresponding to the QoE report sending behavior; or, if the first base station cannot currently receive QoE data or the network status of the first base station is poor, the first base station may not perform an operation on the terminal, so that the QoE configuration of the terminal remains in a state corresponding to the QoE report stop sending behavior.

In some embodiments, the above first operation includes the foregoing item 2).

That is, the first operation includes: receiving second information transmitted by a second base station.

In this embodiment, the second base station is a base station accessed by the terminal. The terminal may receive the second information transmitted by the second base station, so as to learn the status information of the QoE configuration indicated by the second base station for the terminal to be in. In some embodiments, there are two cases including: a first case that the second base station transmits the second information to the terminal after the terminal accesses the second base station; a second case that the second base station transmits the second information to the terminal when the status information of the QoE configuration of the terminal needs to be changed due to changes in the network status of the second base station; that is, the status information of the QoE configuration of the terminal indicated by the second base station can be determined based on the network status of the second base station.

After the terminal receives the second information, in some embodiments, the status information of the QoE configuration of the terminal is the second status information of the QoE configuration, that is, the terminal can control its status information of the QoE configuration in the second status information of the QoE configuration. Specifically, if the current status information of the QoE configuration which the terminal is in is the same as the second status information of the QoE configuration, the terminal can keep the status information of the current QoE configuration unchanged; if the current status information of the QoE configuration which the terminal is in is different from the second status information of the QoE configuration, the terminal may switch from the current status information of the QoE configuration to the second status information of the QoE configuration.

In an optional implementation, in case that the second status information of the QoE configuration corresponds to the above QoE report stop sending behavior, when the status information of the QoE configuration of the terminal is the second status information of the QoE configuration, there is any of the following:
the NAS layer stops QoE measurement collection;
the AS layer stops sending QoE report;
the AS layer stores application layer measurement report;
the NAS layer stops sending QoE report to the AS layer.

In this embodiment, after the terminal receives the second information, if the second status information of the QoE configuration is the second state, combined with the specific QoE collection and reporting process corresponding to FIG. 2, the terminal can switch the status information of the QoE configuration of the terminal to the second status information of the QoE configuration based on the following three processing manners.

A first processing manner is to control the NAS layer to stop collecting QoE data.

In this processing manner, the AS layer can transmit information to the NAS layer to instruct the NAS layer to stop collecting QoE data. The NAS layer does not generate a new QoE report, and then does not transmit a QoE report to the AS layer, and then the terminal does not transmit a QoE report to the second base station. This can save the local cache space of the terminal. In some embodiments, after the NAS layer stops collecting the QoE data, QoE data or QoE reports currently stored at the NAS layer can be deleted to further save the local cache space of the terminal.

After the terminal subsequently receives the second information again, when the second status information of the QoE configuration is the first state, the AS layer can transmit another information to the NAS layer to instruct the NAS layer to restart collecting QoE data and transmitting the QoE data to the AS layer.

A second processing manner is to control the AS layer to stop transmitting QoE data.

In this processing manner, the NAS layer can continuously collect QoE data, and continuously transmit the generated QoE report to the AS layer. But the AS layer only buffers the QoE report received from the NAS layer, and does not transmit the QoE report to the second base station. In this way, even if not transmitting the QoE data, continuous collection of the QoE data can be guaranteed, and then the QoE data will not be missed or lost when the QoE data is restarted to be transmitted later. In some embodiments, when the local cache space of the AS layer is full, a newly received QoE report from the NAS layer can cover an earliest cached QoE report, thereby ensuring that the latest QoE data is always cached in the AS layer, and then quality of the QoE measurement is ensured.

After the terminal subsequently receives the second information again, when the second status information of the QoE configuration is the first state, the AS layer can restart transmitting the QoE data to the second base station.

A third processing manner is to control the NAS layer to stop transmitting QoE data to the AS layer.

In this processing manner, the NAS layer can continue to collect QoE data, but the NAS layer caches the generated QoE report instead of transmitting the QoE report to the AS layer to save the cache space of the AS layer. The AS layer can transmit information to the NAS layer to instruct the NAS layer to stop transmitting QoE data.

After the terminal subsequently receives the second information again, when the second status information of the QoE configuration is the first state, the AS layer can transmit another information to the NAS layer to instruct the NAS layer to restart transmitting the QoE data.

In an optional implementation, when the second status information of the QoE configuration corresponds to the foregoing QoE report stop sending behavior, the second information is used to indicate at least one of the following: a QoE reference identifier of the terminal; a first reason value.

In this embodiment, the first reason value is used to indicate a reason why the second status information of the QoE configuration corresponds to the QoE report stop sending behavior, for example, the load of the second base station is high, which can be determined according to actual situations and is not specifically limited here.

It is to be noted that, in the above two embodiments, the first base station and the second base station may be the same base station or different base stations, which may be determined according to actual conditions and is not limited in this embodiment of the present application.

In some embodiments, the above first operation includes the foregoing items 1) and 2).

In this embodiment, the execution order of items 1) and 2) is not limited, the item 1) may be first executed and then the item 2) is executed, or, the item 2) may be first executed and then the item 1) is executed, or, the item 1) and the item 2) are executed simultaneously, which may be determined according to actual conditions.

The following will be explained based on a first case and a second case.

First case, the first base station and the second base station are the same base stations.

In this case, in an optional implementation, each of the first base station and the second base station is a target base station for handover of the terminal, and performing the first operation includes:
transmitting the first information to the target base station;
receiving second information transmitted by the target base station;
where the second status information of the QoE configuration is determined based on the first status information of the QoE configuration and a network status of the target base station.

In this embodiment, the terminal first executes the item 1) and then executes the item 2). After accessing the target base station, the terminal may transmit the first information to the target base station, so as to inform the target base station of the current status information of the QoE configuration. The target base station may determine second status information of the QoE configuration according to the current status information of the QoE configuration which the terminal is in and its own network status. In some embodiments, there are following four cases.

In case a), the first status information of the QoE configuration is the foregoing first state, and the network status of the target base station does not satisfy a preset condition. The preset condition is a condition that represents a poor network status, such as network congestion or high network load. The target base station can determine that the status information of the second configuration is the first status information. After receiving the second information, the terminal can keep its status information of the QoE configuration unchanged, so that the collection and transmission of QoE data can be continuously performed without interruption after the terminal switches base stations, thereby improving continuity of QoE measurement.

In case b), the first status information of the QoE configuration is the foregoing first state, and the network status of the target base station satisfies a preset condition. In this case, the target base station can determine that the second status information of the QoE configuration is the second status information. After receiving the second information, the terminal can switch its status information of the QoE configuration to the second state, so as to prevent the transmission of QoE data from being affected by the network status of the target base station and improve the accuracy of QoE measurement. In addition, it can also prevent the transmission of QoE data from aggravating network congestion, and ensure normal transmission of other higher-priority signaling and data.

In a case c), the first status information of the QoE configuration is the foregoing second state, and the network status of the target base station does not satisfy the preset condition. In this case, the terminal may change its status information of the QoE configuration to be the second status information due to the poor network status of the source base station for handover or its own reasons, but the network status of the target base station is better. The target base station can determine that the second status information of the QoE configuration is the first status information. After receiving the second information, the terminal can switch its status information of the QoE configuration to the first state, so as to restart collection and transmission of QoE data, and improve the continuity of QoE measurement.

In a case d), the first status information of the QoE configuration is the foregoing second state, and the network status of the target base station satisfies a preset condition. In this case, the terminal may change its status information of the QoE configuration to be the second status information due to the poor network status of the source base station for handover or its own reasons, and the network status of the target base station is also poor. The target base station can determine that the second status information of the QoE configuration is the second status information. After the terminal receives the second information, the terminal can keep its status information of the QoE configuration unchanged, so as to avoid the transmission of QoE data from being affected by the network status of the target base station and improve the accuracy of QoE measurement. In addition, it can also prevent the transmission of QoE data from aggravating network congestion, and ensure the normal transmission of other higher-priority signaling and data.

It is to be noted that, in this embodiment, the first base station and the second base station are the same, and are not limited to the target base station for handover of the terminal, that is, they are not limited to the handover scenario. The first base station and the second base station can be any base station that the terminal accesses, which can be determined according to actual conditions and is not specifically limited here.

Second case, the first base station and the second base station are different base stations.

In an optional implementation, the first base station is a target base station for handover by the terminal, and the second base station is a source base station for handover by the terminal.

The performing the first operation, includes:
before handover, receiving second information transmitted by the second base station;
after handover, transmitting first information to the first base station;
where the second status information of the QoE configuration is determined based on the network status of the second base station.

In this embodiment, the terminal first executes the item 2) and then executes the item 1).

Before the terminal is handed over, the source base station is a base station accessed by the terminal. The source base station can determine second status information of the QoE configuration according to its own network status, and transmit the second information to the terminal. The terminal can receive the second information transmitted by the source base station. For example, if the network status of the source base station satisfies a preset condition, the source base station can determine that the second status information of the QoE configuration is the second status information.

After the terminal is handed over, the target base station is a base station accessed by the terminal, and the terminal can transmit the first information to the target base station to inform the target base station of current status information of the QoE configuration which the terminal is in.

In this implementation, in some embodiments, after performing the first operation, the information processing method performed by the terminal further includes:
receiving third information transmitted by the first base station.

The third information is used to indicate third status information of a QoE configuration. The third status information of the QoE configuration is status information of the QoE configuration indicated by the first base station for the terminal to be in. The third status information of the QoE configuration is determined based on the first status information of the QoE configuration and the network status of the first base station.

After receiving the first information transmitted by the terminal, the first base station can determine the third status information of the QoE configuration according to the first status information of the QoE configuration and its own network status. It is to be noted that, for a specific implementation manner in which the first base station determines the third status information of the QoE configuration can refer to the above description of determining the second status information of the QoE configuration, which are not repeated here to avoid repetition.

In this implementation, in some embodiments, after receiving the second information transmitted by the second base station and before transmitting the first information to the first base station, the information processing method performed by the terminal further includes:
receiving third information transmitted by the second base station.

The third status information of the QoE configuration is determined based on the network status of the first base station.

When the terminal starts handover but before accessing the first base station, if the first base station detects that its own network status satisfies the preset condition, the first base station can determine the third status information of the QoE configuration based on communication with the second base station, and transmit the third information to the second base station, so that the second base station forwards the third information to the terminal. In this way, the terminal can receive the third information to learn in advance the status information of the QoE configuration indicated by the first base station, so that the terminal can switch in advance the status information of the QoE configuration before accessing the first base station, thereby improving processing efficiency of QoE-related information in handover scenarios to minimize interaction between the network status of the first base station and QoE measurement.

Referring to FIG. 4, FIG. 4 is a second flowchart of an information processing method according to an embodiment of the present application. The information processing method shown in FIG. 4 may be performed by a first base station.

As shown in FIG. 4, the information processing method may include the following steps.

Step 401: performing a second operation.

The foregoing second operation includes at least one of the following:
1) receiving first information transmitted by a first device; where the first information is used to indicate first status information of a QoE configuration, and the first status information of the QoE configuration is current status information of a QoE configuration which the terminal is in;
2) transmitting third information to a first device; where the third information is used to indicate third status information of a QoE configuration, and the third status information of the QoE configuration is status information of the QoE configuration indicated by the first base station for the terminal to be in.

The first device is a terminal or a second base station.

In the embodiment of the present application, the terminal or the second base station transmits the first information to the first base station, so that the first base station can determine status of the QoE configuration of the terminal, and then determine subsequent operations performed on the terminal. In addition, the first base station may directly transmit second information to the terminal, or transmit the second information to the terminal through the second base station, to indicate the status of the QoE configuration of the terminal, thereby controlling QoE-related behavior of the terminal and improving flexibility and continuity of QoE measurement of the terminal.

In some embodiments, the first status information of the QoE configuration or the second status information of the QoE configuration includes at least one of the following:
first state, where the first state corresponds to QoE report sending behavior;
second state, where the second state corresponds to QoE report stop sending behavior.

It is to be noted that, for this embodiment, reference may be made to the relevant description of the method embodiment corresponding to FIG. 3, and the same beneficial effect can be achieved. In order to avoid repeated description, details are not repeated here.

The second operation in the embodiment of the present application is described in detail hereinafter.

In some embodiments, the above second operation includes the item 1).

In this embodiment, the first base station is a base station currently accessed by the terminal. Specifically, there are following two cases.

In a first case, the first device is a terminal.

That is, the second operation includes:
receiving first information transmitted by the terminal.

In this case, the first base station may be a target base station for handover by the terminal, or any base station accessed by the terminal, which may be determined according to actual conditions and is not specifically limited here.

It is to be noted that this case is an implementation manner of the first base station in the method embodiment corresponding to FIG. 3. Therefore, reference may be made to relevant descriptions in the method embodiment corresponding to FIG. 3, and the same beneficial effect may be achieved. In order to avoid repeated description, details are not repeated here.

In a second case, the first device is a second base station.

That is, the second operation includes:
receiving first information transmitted by the second base station.

In this case, the first base station is a target base station for handover by the terminal, and the second base station is a source base station for handover by the terminal. After the handover is completed, the source base station may transmit the first information to the target base station, that is, the second base station may transmit the first information to the first base station, so as to inform the first base station of the status information of the QoE configuration of the terminal.

For the implementation manner of the first base station after receiving the first information, reference may be made to relevant descriptions in the method embodiment corresponding to FIG. 3, and the same beneficial effect may be achieved. In order to avoid repeated description, details are not repeated here.

In some embodiments, the above second operation includes the item 2).

In this embodiment, the first base station is a base station currently accessed by the terminal. Specifically, there are following two cases.

In a first case, the first device is a terminal.

That is, the second operation includes:
transmitting third information to the terminal;
where the third status information of the QoE configuration is determined based on the network status of the first base station.

In this case, the first base station may be a target base station for handover by the terminal, or any base station accessed by the terminal, which may be determined according to actual conditions and is not specifically limited here.

It is to be noted that this case is an implementation manner of the first base station in the method embodiment corresponding to FIG. 3. Therefore, reference may be made to relevant descriptions in the method embodiment corresponding to FIG. 3, and the same beneficial effect may be achieved. In order to avoid repeated description, details are not repeated here.

In a second case, the first device is a second base station.

That is, the second operation includes:
transmitting third information to a second base station when the terminal starts handover but before accessing the first base station;
where the third status information of the QoE configuration is determined based on the network status of the first base station.

In this case, the first base station is a target base station for handover by the terminal, and the second base station is a source base station for handover by the terminal. When the terminal starts handover but before accessing the first base station, if the first base station detects that its own network status satisfies a preset condition, the first base station can determine the third status information of the QoE configuration based on communication with the second base station, and transmit the third information to the second base station, so that the second base station forwards the third information to the terminal. In this way, the terminal can receive the third information to learn in advance the status information of the QoE configuration indicated by the first base station, so that the terminal can switch in advance the status information of the QoE configuration before accessing the first base station, thereby improving processing efficiency of QoE-related information in handover scenarios to minimize interaction between the network status of the first base station and QoE measurement.

In an optional implementation, when the third status information of the QoE configuration corresponds to the foregoing QoE report stop sending behavior, the second information is used to indicate at least one of the following: a QoE reference identifier of the terminal; a second reason value.

In this embodiment, the second reason value is used to indicate a reason why the third status information of the QoE configuration corresponds to the QoE report stop sending behavior, for example, the load of the first base station is high, which can be determined according to actual situations and is not specifically limited here.

In some embodiments, the second operation includes the foregoing items 1) and 2).

In this embodiment, the execution order of items 1) and 2) is not limited, the item 1) may be first executed and then the item 2) is executed, or, the item 2) may be first executed and then the item 1) is executed, or, the item 1) and the item 2) are executed simultaneously, which may be determined according to actual conditions.

In an optional implementation, the first base station is a target base station for handover by the terminal, and the second base station is a source base station for handover by the terminal.

The second operation includes:
receiving first information transmitted by the second base station;
transmitting third information to the terminal.

In this embodiment, after the handover of the terminal is completed and the terminal accesses the first base station, the second base station may transmit the first information to the first base station to inform the first base station of the current status information of the QoE configuration which the terminal is in. In addition, the first base station can determine the third status information of the QoE configuration according to the current status information of the QoE configuration which the terminal is in and its own network status. It is to be noted that the execution order of the steps "receiving first information transmitted by the second base station" and "transmitting third information to the terminal" is not limited herein.

For the manner in which the first base station determines the third status information of the QoE configuration, reference may be made to the relevant description of the method embodiment corresponding to FIG. 3, and the same beneficial effect can be achieved. In order to avoid repeated description, details are not repeated here.

In some embodiments, in the handover scenario, before performing the second operation, the information processing method performed by the first base station further includes:
performing a third operation, where the third operation includes at least one of the following:
transmitting fourth information to the second base station, where the fourth information is used to indicate whether the first base station supports QoE configuration;
receiving fifth information transmitted by the second base station, where the fifth information is used to indicate whether the second base station supports QoE configuration.

In this embodiment, the first base station is a target base station for handover by the terminal, and the second base station is a source base station for handover by the terminal. When the source base station selects a target base station for handover, it may consider whether the base station supports QoE configuration. Based on this, base stations in the network system can exchange information about whether they support QoE configuration, so that the source base station can select a base station that supports QoE configuration as the target base station, thereby improving the continuity of QoE measurement of the terminal.

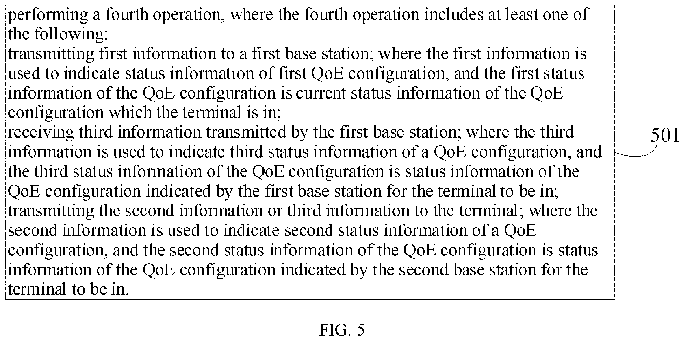

Referring to FIG. 5, FIG. 5 is a third flowchart of an information processing method according to an embodiment of the present application. The information processing method shown in FIG. 5 may be performed by a second base station.

As shown in FIG. 5, the information processing method may include the following steps.

Step 501: performing a fourth operation.

The above fourth operation includes at least one of the following:
transmitting first information to a first base station; where the first information is used to indicate status information of first QoE configuration, and the first status information of the QoE configuration is current status information of the QoE configuration which the terminal is in;
receiving third information transmitted by the first base station; where the third information is used to indicate third status information of a QoE configuration, and the third status information of the QoE configuration is status information of the QoE configuration indicated by the first base station for the terminal to be in;
transmitting the second information or third information to the terminal; where the second information is used to indicate second status information of a QoE configuration, and the second status information of the QoE configuration is status information of the QoE configuration indicated by the second base station for the terminal to be in.

In the embodiment of the present application, the terminal or the second base station transmits the first information to the first base station, so that the first base station can determine status of the QoE configuration of the terminal, and then determine subsequent operations performed on the terminal. In addition, the first base station may directly transmit the second information to the terminal, or transmit the second information to the terminal through the second base station, to indicate the status of the QoE configuration of the terminal, thereby controlling QoE-related behavior of the terminal and improving flexibility and continuity of QoE measurement of the terminal.

In some embodiments, the first status information of the QoE configuration or the second status information of the QoE configuration or the third status information of the QoE configuration includes at least one of the following:
first state, where the first state corresponds to QoE report sending behavior;
second state, where the second state corresponds to QoE report stop sending behavior.

In some embodiments, the above fourth operation includes:
transmitting the second information to the terminal;
where the second status information of the QoE configuration is determined based on a network status of the second base station.

In some embodiments, the first base station is a target base station for handover by the terminal, and the second base station is a source base station for handover by the terminal.

The above fourth operation includes:
transmitting first information to the first base station.

In some embodiments, the first base station is a target base station for handover by the terminal, and the second base station is a source base station for handover by the terminal.

In some embodiments, the above fourth operation includes:
receiving third information transmitted by the first base station when the terminal starts handover but before accessing the first base station;
transmitting the third information to the terminal;
where the third status information of the QoE configuration is determined based on the network status of the first base station.

In some embodiments, before performing the fourth operation, the information processing method performed by the second base station further includes:
performing a fifth operation, where the fifth operation includes at least one of the following:
receiving fourth information transmitted by the first base station, where the fourth information is used to indicate whether the first base station supports QoE configuration;
transmitting fifth information to the first base station, where the fifth information is used to indicate whether the second base station supports QoE configuration.

In some embodiments, in case that the second status information of the QoE configuration corresponds to the QoE report stop sending behavior, the second information is used to indicate at least one of the following: a QoE reference identifier of the terminal; a first reason value; and/or,
in case that the third status information of the QoE configuration corresponds to the QoE report stop sending behavior, the third information is used to indicate at least one of the following: a QoE reference identifier of the terminal; a second reason value.

It is to be noted that this embodiment is an implementation manner of the second base station in the method embodiment corresponding to FIG. 3 or FIG. 4, and thus reference may be made to the relevant description of the method embodiment corresponding to FIG. 3 or FIG. 4, and the same beneficial effect can be achieved. In order to avoid repeated description, details are not repeated here.

The various optional implementation manners introduced in the embodiments of the present application may be implemented in combination with each other if they do not conflict with each other, or may be implemented independently, which is not limited in the embodiments of the present application.

For ease of understanding, examples are provided hereinafter.

In this example, information of whether to support QoE configuration can be exchanged between base stations in the network system. When a terminal performs handover, a source base station can select a base station that supports QoE configuration as a target base station. a detailed description is provided hereinafter based on different scenarios.

Scenario 1: the terminal hands over from a congested base station to a non-congested base station.

In this scenario, a source base station for handover by the terminal is a congested base station, and the target base station for handover by the terminal is a non-congested base station.

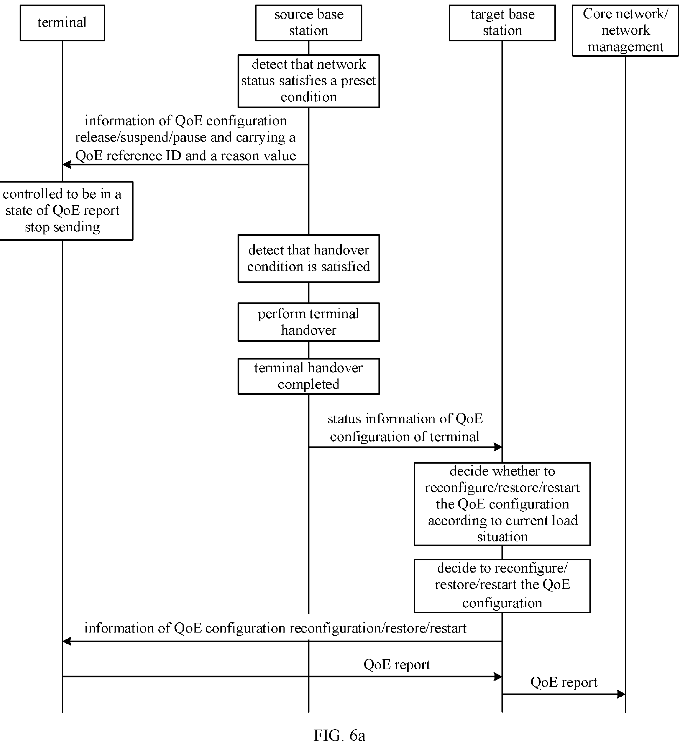

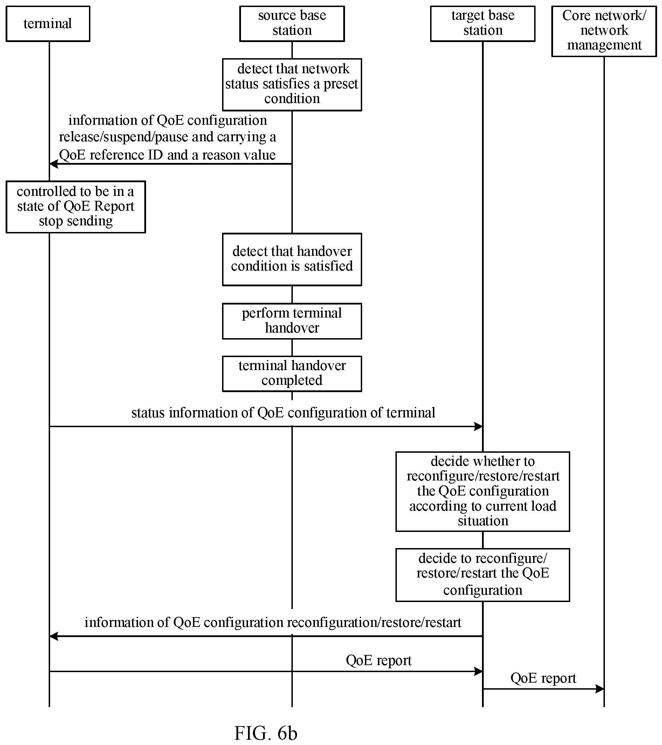

As shown in FIG. 6a and FIG. 6b, before handover, the source base station detects that a network status satisfies a preset condition, such as network congestion or high network load, in order to prevent the transmission of QoE data from aggravating network congestion and affecting normal transmission of signaling and data, the source base station may transmit second information to the terminal, where the second information is information indicating QoE configuration release/suspend/pause and carrying a QoE reference ID and a reason value of the terminal.

After the terminal receives information indicating the QoE configuration release/suspend/pause, the terminal is controlled to be in a status of QoE stop transmission state, which is specifically based on the following three processing manners.

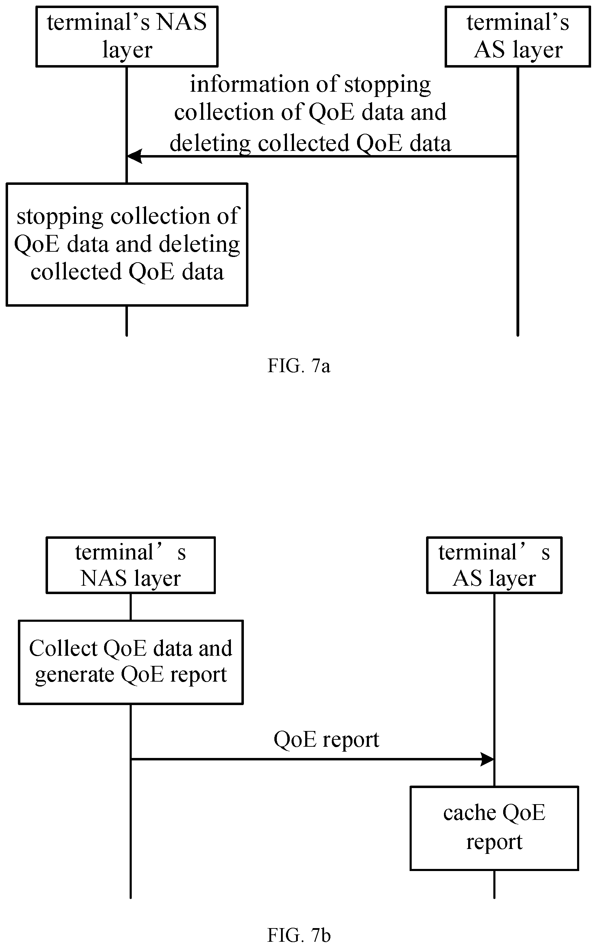

In a first processing manner, as shown in FIG. 7a, an AS layer of the terminal may transmit to the NAS layer, information instructing the NAS layer to stop collecting QoE data and delete collected QoE data. In this way, the NAS layer does not generate a new QoE report and does not transmit a QoE report to the AS layer, and then the terminal does not transmit a QoE report to the source base station, thereby saving the local buffer space of the terminal. When the terminal subsequently receives information of QoE configuration reconfiguration/recovery/restart, the AS layer transmits to the NAS layer information for indicating the NAS layer to restart collecting QoE data and transmitting the QoE data to the AS layer.

In a second processing manner, as shown in FIG. 7b, the NAS layer can continuously collect QoE data, and continuously transmit the generated QoE report to the AS layer. But the AS layer only buffers the QoE report received from the NAS layer, and does not transmit the QoE report to the second base station. In some embodiments, when the local cache space of the AS layer is full, a newly received QoE report from the NAS layer can cover an earliest cached QoE report. After the terminal subsequently receives the information of QoE configuration reconfiguration/recovery/restart, the AS layer restarts transmitting QoE data.

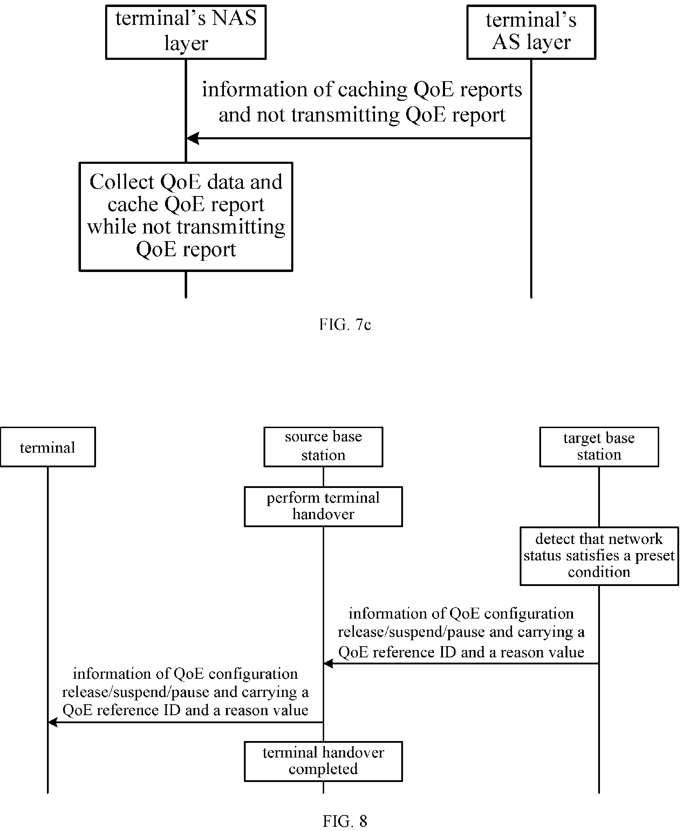

In a third processing manner, as shown in FIG. 7c, the AS layer can transmit information to the NAS layer to instruct the NAS layer to cache the QoE report instead of transmitting the QoE report, thereby saving the cache space of the AS layer, and the NAS layer can continuously collect QoE data and cache the QoE report. After the terminal subsequently receives information of QoE configuration reconfiguration/recovery/restart, the AS layer may transmit information to the NAS layer to instruct the NAS layer to restart transmitting the QoE data.

The source base station can continue to monitor the network status. If the network status has affected the link quality and satisfies a handover condition, the source base station can select a non-congested base station that supports QoE configuration to start handover by the terminal. After the terminal hands over to the target base station, there are two implementation modes:

First implementation mode, as shown in FIG. 6a:
1) the source base station transmits status information of the QoE configuration of the terminal to the target base station, and the status information of the QoE configuration includes configured status information or release/suspend/pause configuration status information.
2) if the status information of the QoE configuration of the terminal is release/suspend/pause configuration status information, the target base station can determine whether to reconfigure/restore/restart the QoE configuration according to current load situation.
3) in case of determining to reconfigure/restore/restart QoE configuration, transmitting QoE configuration reconfiguration/restore/restart collection report information to the terminal.
4) the terminal transmits a QoE report to the target base station, and the target base station transmits the QoE report to the network management or core network.

Second implementation mode, as shown in FIG. 6b:
1) the terminal transmits status information of the QoE configuration of the terminal to the target base station, and the status information of the QoE configuration includes configured status information or release/suspend/pause configuration status information.
2) if the status information of the QoE configuration of the terminal is release/suspend/pause configuration status information, the target base station can decide whether to reconfigure/restore/restart the QoE configuration according to the current load situation.
3) in case of determining to reconfigure/restore/restart QoE configuration, the target base station transmits QoE configuration reconfiguration/restore/restart collection report information to the terminal.
4) the terminal transmits a QoE report to the target base station, and the target base station transmits the QoE report to the network management or core network.

Scenario 2: the terminal hands over from a non-congested base station to a congested base station.

In this scenario, the terminal may hand over from a non-congested base station to a congested base station due to location movement. As shown in FIG. 8, the difference between this scenario and the scenario 1 is that when the terminal starts handover but before accessing the target base station, if the target base station detects that its network status satisfies a preset condition and determines to indicate status information of the QoE configuration of the terminal to be release/suspend/pause configuration status information, the target base station transmits to the source base station, information indicating QoE configuration release/suspend/pause and carrying QoE reference ID and a reson value of the terminal. The source base station may forward to the terminal, the information indicating QoE configuration release/suspend/pause and carrying the QoE reference ID and reason value of the terminal. After receiving the information indicating QoE configuration release/suspend/pause, the terminal can perform corresponding processing according to the processing method in the scenario 1.

Scenario 3: the terminal hands over from a congested base station to another congested base station.

The difference between this scenario and the scenario 1 is that in step 2) of the first implementation mode and second implementation mode, since the target base station is a congested base station, the target base station can wait for the network status not to satisfy the preset condition, and then performs the step 3).

In addition to the above solutions, there may be other solutions, including:
Solution 1: when network congestion occurs in a base station accessed by the terminal, the base station can transmit information of network congestion or information of QoE configuration release/suspend/pause to the core network or network management.
Solution 2: when the core network or network management releases/suspends/pauses the QoE configuration, or detects that the terminal is handed over to a new base station, it can transmit information of QoE configuration release/suspend/pause to the new base station.

In this example, information of whether to support QoE configuration can be exchanged between base stations in the network system. In the scenario of terminal's handover, the target base station can obtain the status information of the QoE configuration of the terminal through interaction with the source base station or the terminal. Then, the target base station can determine whether to transmit the information of reconfiguring/restoring/restarting QoE configuration to the terminal according to its own network status. In addition, when receiving information of QoE configuration release/suspend/pause transmitted by the first base station or the second base station, QoE report stop sending behavior of the terminal can be implemented through interaction between the AS layer and the NSA layer.

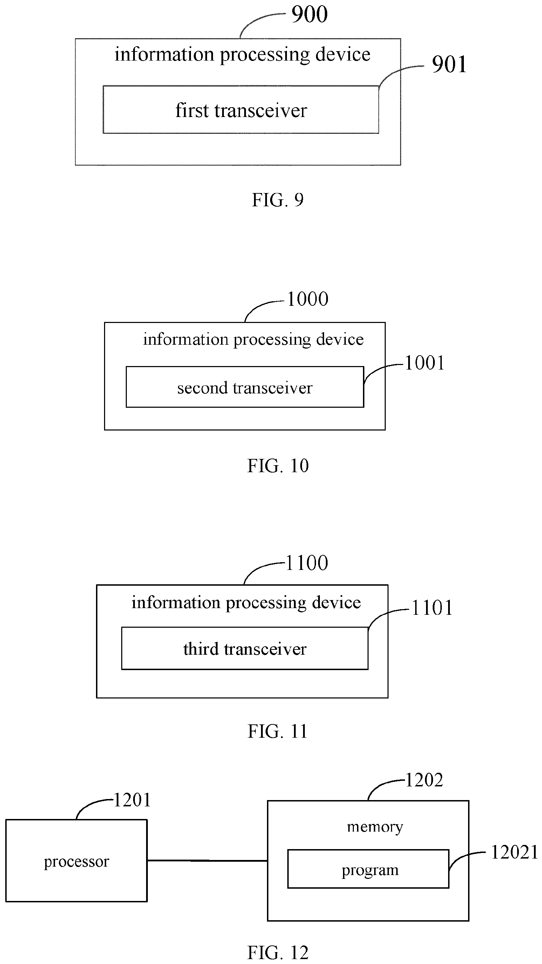

Referring to FIG. 9, FIG. 9 is a first schematic diagram of an information processing device according to an embodiment of the present application.

As shown in Fig. 9, the information processing device 900 includes:
a first transceiver 901 configured to perform a first operation, where the first operation includes at least one of the following:
transmitting first information to a first base station; where the first information is used to indicate first status information of a QoE configuration, and the first status information of the QoE configuration is current status information of a QoE configuration which the terminal is in;
receiving second information transmitted by a second base station; where the second information is used to indicate second status information of a QoE configuration, and the second status information of the QoE configuration is status information of a QoE configuration indicated by the second base station for the terminal to be in.

The first base station and the second base station are the same base station or different base stations.

In some embodiments, the first status information of the QoE configuration or the second status information of the QoE configuration includes at least one of the following:
first state, where the first state corresponds to QoE report sending behavior;
second state, where the second state corresponds to QoE report stop sending behavior.

In some embodiments, the first base station and the second base station are the same, and are target base stations for handover by the terminal.

The first transceiver 901 is specifically configured to:
transmit the first information to the target base station;
receive second information transmitted by the target base station;
where the second status information of the QoE configuration is determined based on the first status information of the QoE configuration and a network status of the target base station.

In some embodiments, after receiving the second information transmitted by the second base station, the status information of the QoE configuration of the terminal is the second status information of the QoE configuration.

In some embodiments, in case that the second status information of the QoE configuration corresponds to the QoE report stop sending behavior, when the status information of the QoE configuration of the terminal is the second status information of the QoE configuration, there is any of the following:
the NAS layer stops QoE measurement collection;
the AS layer stops sending QoE report;
the AS layer stores application layer measurement report;
the NAS layer stops sending QoE report to the AS layer.

In some embodiments, when the second status information of the QoE configuration corresponds to the QoE report stop sending behavior, the second information is used to indicate at least one of the following: a QoE reference identifier of the terminal; a first reason value.

The information processing device 900 can implement the various processes of the method embodiment corresponding to FIG. 3 in the embodiment of the present application, and achieve the same beneficial effect. To avoid repetition, details are not repeated here.

Referring to FIG. 10, FIG. 10 is a second schematic diagram of an information processing device according to an embodiment of the present application.

As shown in FIG. 10, the information processing device 1000 includes:
a second transceiver 1001 configured to perform a second operation, where the second operation includes at least one of the following:
receiving first information transmitted by a first device; where the first information is used to indicate first status information of a QoE configuration, and the first status information of the QoE configuration is current status information of a QoE configuration which the terminal is in;
transmitting third information to the first device; where the third information is used to indicate third status information of a QoE configuration, and the third status information of the QoE configuration is status information of the QoE configuration indicated by the first base station for the terminal to be in.

The first device is a terminal or a second base station.

In some embodiments, the first status information of the QoE configuration or the second status information of the QoE configuration includes at least one of the following:
first state, where the first state corresponds to QoE report sending behavior;
second state, where the second state corresponds to QoE report stop sending behavior.
In some embodiments, the second transceiver 1001 is specifically configured to:
transmit third information to the terminal;
where the third status information of the QoE configuration is determined based on the network status of the first base station.

In some embodiments, the first base station may be a target base station for handover by the terminal, and the second base station is a source base station for handover by the terminal.

The second transceiver 1001 is specifically configured to:
receive first information transmitted by the second base station.

In some embodiments, the second transceiver 1001 is further configured to:
transmit third information to the terminal;
where the third status information of the QoE configuration is determined based on the first status information of the QoE configuration and the network status of the first base station.

In some embodiments, the first base station is a target base station for handover by the terminal, the first device is a second base station, and the second base station is a source base station for handover by the terminal.

The second transceiver is specifically configured to:
transmit the third information to the second base station when the terminal starts handover but before accessing the first base station;
where the third status information of the QoE configuration is determined based on the network status of the first base station.

In some embodiments, the second transceiver 1001 is further configured to:
perform a third operation, where the third operation includes at least one of the following:
transmit fourth information to the second base station, where the fourth information is used to indicate whether the first base station supports QoE configuration;
receive fifth information transmitted by the second base station, where the fifth information is used to indicate whether the second base station supports QoE configuration.

In some embodiments, in case that the third status information of the QoE configuration corresponds to the QoE report stop sending behavior, the third information is used to indicate at least one of the following: a QoE reference identifier of the terminal; a second reason value.

The information processing device 1000 can implement the various processes of the method embodiment corresponding to FIG. 4 in the embodiment of the present application, and achieve the same beneficial effect. To avoid repetition, details are not repeated here.

Referring to FIG. 11, FIG. 11 is a third schematic diagram of an information processing device according to an embodiment of the present application.

As shown in FIG. 11, the information processing device 1100 includes:
a third transceiver 1101 configured to perform a fourth operation, where the fourth operation includes at least one of the following:
transmitting first information to a first base station; where the first information is used to indicate first status information of QoE configuration, and the first status information of the QoE configuration is current status information of the QoE configuration which the terminal is in;
receiving third information transmitted by the first base station; where the third information is used to indicate third status information of a QoE configuration, and the third status information of the QoE configuration is status information of the QoE configuration indicated by the first base station for the terminal to be in;
transmitting the second information or third information to the terminal; where the second information is used to indicate second status information of a QoE configuration, and the second status information of the QoE configuration is status information of the QoE configuration indicated by the second base station for the terminal to be in.

In some embodiments, the first status information of the QoE configuration or the second status information of the QoE configuration or the third status information of the QoE configuration includes at least one of the following:
first state, where the first state corresponds to QoE report sending behavior;
second state, where the second state corresponds to QoE report stop sending behavior.

In some embodiments, the third transceiver 1101 is specifically configured to:
transmit the second information to the terminal;
where the second status information of the QoE configuration is determined based on a network status of the second base station.

In some embodiments, the first base station is a target base station for handover by the terminal, and the second base station is a source base station for handover by the terminal.

The third transceiver 1101 is specifically configured to:
transmit first information to the first base station.

In some embodiments, the first base station is a target base station for handover by the terminal, and the second base station is a source base station for handover by the terminal.

In some embodiments, the above fourth operation includes:
receiving third information transmitted by the first base station when the terminal starts handover but before accessing the first base station;
transmitting the third information to the terminal;
where the third status information of the QoE configuration is determined based on the network status of the first base station.

In some embodiments, the third transceiver 1101 is further configured to:
perform a fifth operation, where the fifth operation includes at least one of the following:
receiving fourth information transmitted by the first base station, where the fourth information is used to indicate whether the first base station supports QoE configuration;
transmitting fifth information to the first base station, where the fifth information is used to indicate whether the second base station supports QoE configuration.

In some embodiments, in case that the second status information of the QoE configuration corresponds to the QoE report stop sending behavior, the second information is used to indicate at least one of the following: a QoE reference identifier of the terminal; a first reason value; and/or,
in case that the third status information of the QoE configuration corresponds to the QoE report stop sending behavior, the third information is used to indicate at least one of the following: a QoE reference identifier of the terminal; a second reason value.

The information processing device 1100 can implement the various processes of the method embodiment corresponding to FIG. 5 in the embodiment of the present application, and achieve the same beneficial effect. To avoid repetition, details are not repeated here.

One embodiment of the present application further provides an electronic device. Referring to FIG. 12, the electronic device may include a processor 1201, a memory 1202, and a program 12021 stored on the memory 1202 and executable on the processor 1201. When the computer program 12021 is executed by the processor 1201, any step in the method embodiment corresponding to FIG. 3, FIG. 4 or FIG. 5 can be implemented and the same beneficial effect can be achieved, which will not be repeated here.

Those skilled in the art can understand that all or part of the steps of the methods of the above embodiments can be completed by a program instructing related hardware, and the program can be stored in a readable medium. One embodiment of the present application further provides a readable storage medium, which includes a computer program stored thereon. When the computer program is executed by a processor, any step in the method embodiment corresponding to FIG. 3, FIG. 4 or FIG. 5 can be implemented and the same beneficial effect can be achieved, which will not be repeated here. The readable storage medium, for example, may be a read-only memory (ROM), a random access memory (RAM), disks or CDs.

The above is the preferred implementation of the embodiments of the present application. It is to be pointed out that those skilled in the art can make some improvements and modifications without departing from the principle of the present application, and these improvements and modifications should also be considered as falling within the protection scope of the present application.

## Claims

1. An information processing method, performed by a terminal, comprising:
performing a first operation; wherein the first operation includes at least one of the following:
transmitting first information to a first base station; wherein the first information is used to indicate first status information of a QoE configuration, and the first status information of the QoE configuration is current status information of a QoE configuration which the terminal is in;
receiving second information transmitted by a second base station; wherein the second information is used to indicate second status information of a QoE configuration, and the second status information of the QoE configuration is status information of a QoE configuration indicated by the second base station for the terminal to be in;
wherein the first base station and the second base station are the same base stations or different base stations.

2. The information processing method according to claim 1, wherein the first status information of the QoE configuration or the second status information of the QoE configuration includes at least one of the following:
first state, wherein the first state corresponds to QoE report sending behavior;
second state, wherein the second state corresponds to QoE report stop sending behavior.

3. The information processing method according to claim 1, wherein the first base station and the second base station are the same, and are target base stations for handover by the terminal;
the first operation includes:
transmitting the first information to the target base station;
receiving the second information transmitted by the target base station;
wherein the second status information of the QoE configuration is determined based on the first status information of the QoE configuration and a network status of the target base station.

4. The information processing method according to claim 1, wherein after receiving the second information transmitted by the second base station, the status information of the QoE configuration of the terminal is the second status information of the QoE configuration.

5. The information processing method according to claim 4, wherein the status information of the QoE configuration of the terminal is the second status information of the QoE configuration in case that the second status information of the QoE configuration corresponds to the QoE report stop sending behavior, the method further includes any of the following:
an NAS layer stops QoE measurement collection;
an AS layer stops sending QoE report;
the AS layer stores application layer measurement report;
the NAS layer stops sending QoE report to the AS layer.

6. The information processing method according to claim 1, wherein when the second status information of the QoE configuration corresponds to the QoE report stop sending behavior, the second information is used to indicate at least one of the following: a QoE reference identifier of the terminal; a first reason value.

7. An information processing method, performed by a first base station, comprising:
performing a second operation; wherein the second operation includes at least one of the following:
receiving first information transmitted by a first device; wherein the first information is used to indicate first status information of a QoE configuration, and the first status information of the QoE configuration is current status information of a QoE configuration which a terminal is in;
transmitting third information to the first device; wherein the third information is used to indicate third status information of a QoE configuration, and the third status information of the QoE configuration is status information of the QoE configuration indicated by the first base station for the terminal to be in;
wherein the first device is the terminal or a second base station.

8. The information processing method according to claim 7, wherein the first status information of the QoE configuration or the third status information of the QoE configuration includes at least one of the following:
first state, wherein the first state corresponds to QoE report sending behavior;
second state, wherein the second state corresponds to QoE report stop sending behavior.

9. The information processing method according to claim 7, wherein the second operation includes:
transmitting third information to the terminal;
wherein the third status information of the QoE configuration is determined based on a network status of the first base station.

10. The information processing method according to claim 7, wherein the first base station is a target base station for handover by the terminal, and the second base station is a source base station for handover by the terminal;
the second operation includes:
receiving the first information transmitted by the second base station.

11. The information processing method according to claim 10, wherein the second operation further includes:
transmitting the third information to the terminal;
wherein the third status information of the QoE configuration is determined based on the first status information of the QoE configuration and the network status of the first base station.

12. The information processing method according to claim 7, wherein the first base station is a target base station for handover by the terminal, the first device is the second base station, and the second base station is a source base station for handover by the terminal;
the second operation includes:
transmitting the third information to the second base station when the terminal starts handover but before accessing the first base station;
wherein the third status information of the QoE configuration is determined based on the network status of the first base station.

13. The information processing method according to claim 7, wherein before performing the second operation, the method further includes:
performing a third operation, wherein the third operation includes at least one of the following:
transmitting fourth information to the second base station, wherein the fourth information is used to indicate whether the first base station supports QoE configuration;
receiving fifth information transmitted by the second base station, wherein the fifth information is used to indicate whether the second base station supports QoE configuration.

14. The information processing method according to claim 7, wherein in case that the third status information of the QoE configuration corresponds to QoE report stop sending behavior, the third information is used to indicate at least one of the following: a QoE reference identifier of the terminal; a second reason value.

15. An information processing method, performed by a second base station, comprising:
performing a fourth operation, wherein the fourth operation includes at least one of the following:
transmitting first information to a first base station; wherein the first information is used to indicate first status information of a QoE configuration, and the first status information of the QoE configuration is current status information of a QoE configuration which a terminal is in;
receiving third information transmitted by the first base station; wherein the third information is used to indicate third status information of a QoE configuration, and the third status information of the QoE configuration is status information of a QoE configuration indicated by the first base station for the terminal to be in;
transmitting the second information or third information to the terminal; wherein the second information is used to indicate second status information of a QoE configuration, and the second status information of the QoE configuration is status information of the QoE configuration indicated by the second base station for the terminal to be in.

16. The information processing method according to claim 15, wherein the first status information of the QoE configuration or the second status information of the QoE configuration or the third status information of the QoE configuration includes at least one of the following:
first state, wherein the first state corresponds to QoE report sending behavior;
second state, wherein the second state corresponds to QoE report stop sending behavior.

17. The information processing method according to claim 15, wherein the fourth operation includes:
transmitting the second information to the terminal;
wherein the second status information of the QoE configuration is determined based on a network status of the second base station.

18. The information processing method according to claim 15, wherein the first base station is a target base station for handover by the terminal, and the second base station is a source base station for handover by the terminal;
the fourth operation includes:
transmitting the first information to the first base station.

19. The information processing method according to claim 15, wherein the first base station is a target base station for handover by the terminal, and the second base station is a source base station for handover by the terminal;
the fourth operation includes:
receiving the third information transmitted by the first base station when the terminal starts handover but before accessing the first base station;
transmitting the third information to the terminal;
wherein the third status information of the QoE configuration is determined based on the network status of the first base station.

20. The information processing method according to claim 15, wherein before performing the fourth operation, the method further includes:
performing a fifth operation, wherein the fifth operation includes at least one of the following:
receiving fourth information transmitted by the first base station, wherein the fourth information is used to indicate whether the first base station supports QoE configuration;
transmitting fifth information to the first base station, wherein the fifth information is used to indicate whether the second base station supports QoE configuration.

21. The information processing method according to claim 15, wherein in case that the second status information of the QoE configuration corresponds to QoE report stop sending behavior, the second information is used to indicate at least one of the following: a QoE reference identifier of the terminal; a first reason value; and/or,
in case that the third status information of the QoE configuration corresponds to the QoE report stop sending behavior, the third information is used to indicate at least one of the following: a QoE reference identifier of the terminal; a second reason value.

22. An information processing device, comprising:
a first transceiver configured to perform a first operation, wherein the first operation includes at least one of the following:
transmitting first information to a first base station; wherein the first information is used to indicate first status information of a QoE configuration, and the first status information of the QoE configuration is current status information of a QoE configuration which a terminal is in;
receiving second information transmitted by a second base station; wherein the second information is used to indicate second status information of a QoE configuration, and the second status information of the QoE configuration is status information of a QoE configuration indicated by the second base station for the terminal to be in;
wherein the first base station and the second base station are the same base stations or different base stations.

23. An information processing device, comprising:
a second transceiver configured to perform a second operation, wherein the second operation includes at least one of the following:
receiving first information transmitted by a first device; wherein the first information is used to indicate first status information of a QoE configuration, and the first status information of the QoE configuration is current status information of a QoE configuration which a terminal is in;
transmitting third information to the first device; wherein the third information is used to indicate third status information of a QoE configuration, and the third status information of the QoE configuration is status information of a QoE configuration indicated by the first base station for the terminal to be in;
wherein the first device is a terminal or a second base station.

24. An information processing device, comprising:
a third transceiver configured to perform a fourth operation, wherein the fourth operation includes at least one of the following:
transmitting first information to a first base station; wherein the first information is used to indicate first status information of a QoE configuration, and the first status information of the QoE configuration is current status information of a QoE configuration which a terminal is in;
receiving third information transmitted by the first base station; wherein the third information is used to indicate third status information of a QoE configuration, and the third status information of the QoE configuration is status information of a QoE configuration indicated by the first base station for the terminal to be in;
transmitting second information or the third information to the terminal; wherein the second information is used to indicate second status information of a QoE configuration, and the second status information of the QoE configuration is status information of a QoE configuration indicated by the second base station for the terminal to be in.

25. An electronic device, comprising: a processor, a memory, and a computer program stored on the memory and executable on the processor; wherein the processor executes the computer program to perform steps of the method according to any one of claims 1 to 6, or the processor executes the computer program to perform steps of the method according to any one of claims 7 to 14, or the processor executes the computer program to perform steps of the method according to any one of claims 15 to 21.

26. A computer-readable storage medium, comprising: a computer program stored thereon; wherein the computer program, when executed by a processor, causes the processor to perform steps of the method according to any one of claims 1 to 6, or to perform steps of the method according to any one of claims 7 to 14, or t to perform steps of the method according to any one of claims 15 to 21.
